# EUROPEAN PATENT APPLICATION

(11) **EP 3 029 961 A1**
(43) Date of publication of application: **08.06.2016**
(21) Application number: 14306932.6
(22) Date of filing: 01.12.2014
(51) Int. Cl.: H04W 4/00, H04W 76/02

(54) **Method and device for a connectionless bearer service**

(71) Applicant: ALCATEL LUCENT, 92100 Boulogne-Billancourt (FR)
(72) Inventor: Zeller, Dietrich, 70435 Stuttgart (DE); Bakker, Hajo-Erich, 70435 Stuttgart (DE); Doetsch, Uwe, 70435 Stuttgart (DE); Doll, Mark, 70435 Stuttgart (DE)
(74) Representative: Huber, Meik

(57) **Abstract**

A method for establishing a connectionless bearer service and a method for forwarding data packets in a connectionless bearer service according is disclosed. Virtual access networks are defined having a tree structure. A network node performing the method establishes a forwarding table for forwarding data packets based on a virtual access network identifier received with the data packets. The forwarding table is used for forwarding downstream data packets.

## Description

### FIELD OF THE INVENTION

The present invention relates to a method and apparatus for a connectionless bearer service in wireless cellular networks.

### BACKGROUND OF THE INVENTION

This section introduces aspects that may be helpful in facilitating a better understanding of the invention. Accordingly, the statements of this section are to be read in this light and are not to be understood as admission about what is in the prior art.

In further wireless networks, e.g. of the fifth generation (5G), small data transmission or short transaction based communication is a typical scenario for Machine to Machine communication (M2M) and Internet of Things (IoT). This necessitates in general reduction of signalling overhead in connection with small data packets as the signalling overhead is significant compared to the overall data sent on the network. Thus, reduction of signalling overhead for bearer setup and release is one key element to achieve network efficiency when small, sporadic data packets are sent, e.g. in Machine to Machine communication scenarios. Further, many 5G scenarios require ultra low latency communication with negligible setup delays.

In current wireless networks of the fourth generation (4G) with their connection-oriented bearer services, transmission of small data is extremely inefficient. The signalling load in the networks may exceed the load caused by the user data itself.

In addition, the connection oriented nature of the bearer services incurs necessarily a connection setup delay (approximately more than 50 ms), which exceeds the requirements of 5G to support real-time applications with response times lower than 10 ms.

The 3rd Generation Partnership Project (3GPP) has recognized the problem in its report 3GPP TR 23.887 and provides potential solutions to mitigate some of the issues described above. These solutions are involving the control plane very much and therefore do not solve the control plane overload.

### SUMMARY OF THE INVENTION

It is an object of the invention to address the above mentioned problems.

According to one embodiment of the invention, a method for establishing a connectionless bearer service is proposed. A data packet is transmitted. The data packet comprises user data and header data. The header data comprises at least a virtual access network identifier. The virtual access network identifier is a unique identifier defining a unique virtual access network for the connectionless bearer service. A unique virtual access network is to be understood as a part of the network. The virtual access network has e.g. a tree structure connecting a source and a sink, i.e. endpoints. The source is a network node from which the data packet originates. The sink is a network node which is the destination of a data packet. The virtual access network contains only network elements between the source and the destination of a data packet transmitted. No multiple paths are possible from a source to a sink in the virtual access network. The virtual access network is composed of a subset of all network nodes of the network. A connectionless bearer service is to be understood as a service for data transmission not using a connection oriented data transmission procedure. There is no need for a connection setup procedure as it needs to be performed in connection oriented networks. The virtual access network itself defines a unique data path from the source to the sink and vice versa. This has the advantage that a connection establishment, which is time consuming and especially for small data is very inefficient, is omitted.

According to one embodiment, the header data further comprises an access destination address. The access destination address is within the physical network of a mobile access network a unique destination address of the data packet.

According to one embodiment, the header data further comprises an access source address. The access source address is within the physical network of a mobile access network a unique source address of the data packet.

According to one embodiment, different virtual access network identifiers are assigned to different services received or provided by the same device. By assigning different virtual access network identifiers for different services, multiple virtual access networks are defined, even if they contain the same source and the same sink and include the same network nodes in the network path. This has the advantage that the different virtual access networks can have different properties, e.g. different Quality of Service properties.

According to one embodiment, a method for forwarding data packets in a connectionless bearer service is proposed. The method comprises a step of forwarding a data packet. The data packet comprises user data and header data. The header data comprises at least a virtual access network identifier. The virtual access network identifier is a unique identifier extending across networks and defines a unique virtual access network for the connectionless bearer service. A unique virtual access network is to be understood as a network, e.g. a hierarchical network having a tree structure connecting a source and a sink. A sink is a network node, i.e. an endpoint which is the destination of a data packet transmitted. The virtual access network contains only network elements between the source and the destination of a data packet transmitted. No multiple paths are possible from a source to a sink in the virtual access network. The virtual access network is composed of a subset of all network nodes of the network. The network node performing the method for forwarding data packets is one network node of the virtual access network. A connectionless bearer service is to be understood as a service for data transmission not using a connection oriented data transmission procedure. There is no need for a connection setup procedure as it needs to be performed in connection oriented networks. The virtual access network itself defines a unique data path from the source to the sink and vice versa. This has the advantage that the effort for connection establishment, which is time consuming and especially for small data is very inefficient, is reduced.

According to one embodiment, the method further comprises a step of forwarding by a network node a data packet sent by a User Equipment to the virtual access network. The data packet is forwarded to the neighbouring network node one level higher in the hierarchy of the virtual access network tree structure. The network node contains a forwarding table. Data regarding the network node one level lower in the hierarchy of the virtual access network from which a data packet was received is added to the forwarding table. Further, the forwarding table contains a source address of the data packet. The entries of the forwarding table are kept for a certain time in the network node. The time how long an entry in the forwarding table is kept is a design parameter, but preferably, it is longer than a response time to a request message.

According to one embodiment, the network node further forwards a data packet to a neighbouring network node one level lower in the hierarchy of the virtual access network according to the forwarding table of the network node. Thus, when receiving a data packet in upstream communication, from a User Equipment to the network, the forwarding table is maintained as described above. When a response is received in the network node, which should be sent from the network to the User Equipment, the forwarding table recognizes the destination address of the data packet, which corresponds to the source address in an upstream communication data packet and determines the correct network node one level below in the tree structure and the appropriate link for reaching the destination address.

According to one embodiment, the header data further comprises an access destination address. The access destination address is a unique destination address of the data packet extending across networks. The header data further comprises an access source address. The access source address is a unique source address of the data packet extending across networks.

According to one embodiment, the forwarding tables in the network nodes and the virtual access network identifiers define a connectionless tunnel protocol for forwarding data packets from a access source address to a access destination address.

According to one embodiment, a network node for performing a method for forwarding data packets as described above is proposed.

According to one embodiment, a network node for forwarding data packets in a connectionless bearer service is proposed. The network node comprises a receiver for receiving a data packet. The data packet comprises user data and header data. The header data comprises at least a virtual access network identifier. The virtual access network identifier is a unique identifier extending across networks and defining a unique virtual access network for the connectionless bearer service. The network node further comprises a source address analyser for analysing the source of a data packet according to the header data of the data packet. The network node further comprises a forwarding table for storing the network node one level lower in the hierarchy of the virtual access network from which the data packet was received. The forwarding table is further for storing the source address of the data packet received. The network node further comprises a transmitter for sending a data packet downstream to a network node one level lower in hierarchy of the virtual access network according to the information stored in the forwarding table.

According to one embodiment, a User Equipment for establishing a connectionless bearer service is proposed. The User Equipment performs a method for establishing a connectionless bearer service as described above.

According to one embodiment, a virtual access network for transmitting data related to a dedicated service is proposed. The virtual access network comprising at least one source endpoint, at least one sink endpoint and at least one network node in the network path between the source endpoint and the sink endpoint. The virtual access network is a network slice of a physical radio access network. The virtual access network has a tree structure and is allocated to a dedicated service. The virtual access network is configured by a virtual access network identifier and is established by providing forwarding tables related to the virtual access network identifier in the network nodes as described above. The virtual access network provides a service oriented connectionless bearer service.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: discloses a wireless network architecture
- Fig. 2: discloses a schematic overview of a connection oriented bearer service
- Fig. 3: discloses a data packet according to the invention
- Fig. 4: discloses a schematic overview of a network according to the invention
- Fig. 5: discloses a method for forwarding data packets according to the invention
- Fig. 6: discloses a schematic overview of one embodiment of a connectionless bearer service according to the invention
- Fig. 7: discloses a schematic overview of one embodiment of a connectionless bearer service according to the invention
- Fig. 8: discloses a schematic overview of one embodiment of a connectionless bearer service according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

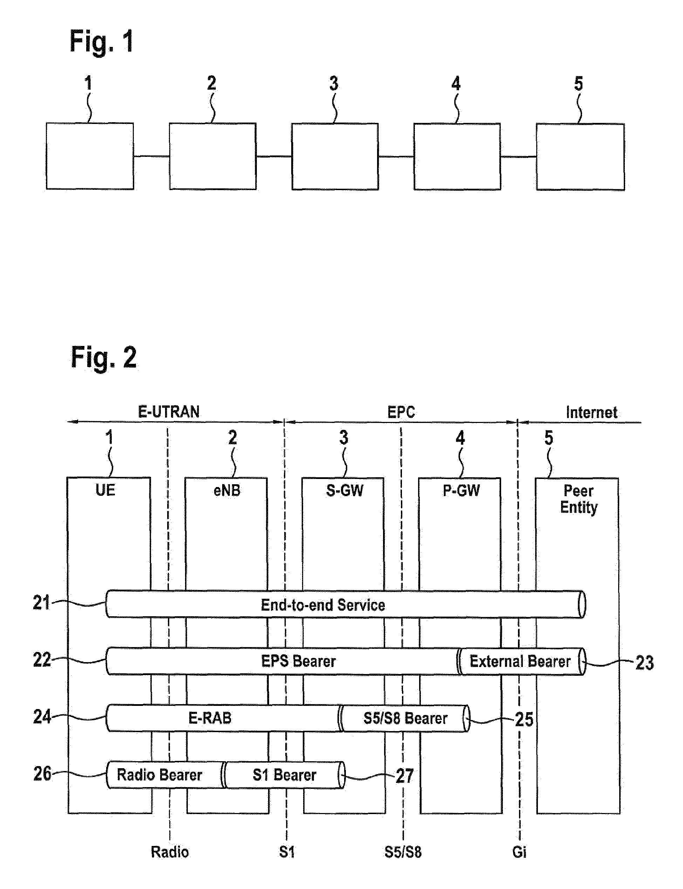

Fig. 1 discloses an architecture for a wireless network, e.g. a 4G or a future 5G network. A User Equipment 1 communicates to a base station, e.g. an eNodeB 2. User Equipment 1 and eNodeB 2 belong to the Evolved Universal Mobile Telecommunication System Terrestrial Radio Access Network (E-UTRAN). The eNodeB 2 is connected to a Serving Gateway (S-GW) 3. The Serving Gateway 3 is connected to a Packet Data Network Gateway (P-GW) 4, which provides access to the external network 5, e.g. the Internet.

Fig. 2 discloses a schematic view of a connection oriented bearer service. An end-to-end connection between a User Equipment 1 and an external network 5 is depicted as end-to-end bearer 21. It is provided by an Evolved Packet Switched System bearer (EPS-bearer) 22 and an external bearer 23 providing connection to an external network 5, e.g. the Internet. An EPS-bearer 22 uniquely identifies traffic flows that receive a common Qualtiy of Service (QoS) treatment between a User Equipment 1 and a Packet Data Network Gateway (P-GW) 4. The EPS-Bearer 22 is a virtual connection between the User Equipment 1 and the Packet Date Network Gateway 4, which identifies data sent and received between these two end points with specific QoS attributes, e.g QCI, GBR, Allocation Retention Priorty. The Evolved UTRAN Radio Access Bearer (e-RAB) 24 transports the packet of an EPS-Bearer 22 between the User Equipment 1 and the Serving Gateway (S-GW) 3. The S5/S8 Bearer 25 transports the packets of an EPS bearer 22 between the Serving Gateway 3 and the Packet Data Network Gateway 4. The Radio Bearer 26 transports packet of an E-RAB 24 between the User Equipment 1 and the eNodeB 2. An S1 Bearer 27 transports the packets of an E-RAB 24 between the eNodeB 2 and the Serving Gateway 3. Packet exchange between the User Equipment 1 and the external network 5 are assigned to one or more EPS-Bearer 22 by means of Traffic Flow Templates (TFT) Defining Service Data Flows (SDF). The Radio Bearer 26, S1 Bearer 27 and S5/S8 Bearer 25 are bound together by switching tables. The switching tables thus providing a connection oriented connection.

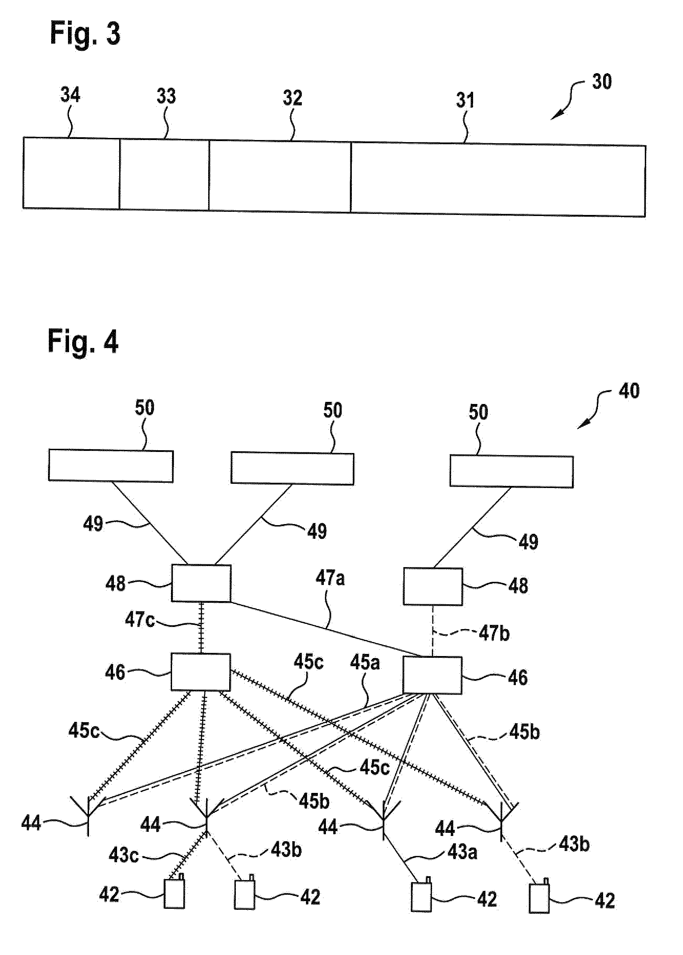

Fig. 3 discloses a message format for a data packet 30 to be transmitted with a connectionless tunnelling protocol CLTP according to the invention. The data packet 30 includes payload data 31 and header data. The header data includes header data as known in the art which is necessary for data transmission, e.g. checksum data, flags, etc. and which are not described in further detail. Further, the data packet 30 contains a virtual access network identifier 32. The virtual access network identifier 32 is a unique identifier extending across physical networks and defining a unique virtual access network for the connectionless bearer service. A unique virtual access network is described in more detail with regard to the figures below. Further, the data packet 30 contains an access source address 33. The access source address 33 is a unique source address of the origin of the data packet 30 identifying the source device from which the data packet 30 originates. In upstream communication, the source device of a data packet 30 is e.g. a User Equipment 1. In downstream communication, the source device of a data packet 30 is e.g. a Packet Data Network Gateway 4. Further, the data packet 30 contains an access destination address 34. The access destination address 34 is a unique destination address of the data packet 30 identifying the destination device to which the data packet is to be sent. In upstream communication, the destination device of a data packet 30 is e.g. Packet Data Network Gateway 4. In downstream communication, the destination device of a data packet 30 is e.g. a User Equipment 1. Both, access source address 33 and access destination address 34 are unique addresses. This means, each access source address 33 and each access destination address 34 is assigned to a concrete device even when considering multiple networks, including neighbouring networks. This way, it is assured that one access source address 33 or one access destination address 34 is not assigned to two devices in different physical networks and the addresses allow therefore a distinct identification of the source and destination device, respectively.

Fig. 4 discloses a wireless network scenario 40 according to the invention. For sake of simplicity, only a few network elements are shown. Wireless access is provided to User Equipments 42, e.g. by an LTE or 5G network. The User Equipments 42 are connected to a external networks 50, e.g. the Internet including servers, cloud like infrastructure and other network devices 50. The User Equipments 42 connect to respective base stations 44, e.g. eNodeBs by a Radio Access link 43a, 43b, 43c, which provides a wireless connection. The base stations 44 are connected to Serving Gateways 46 by corresponding network links 45a, 45b, 45c. The Serving Gateways 46 are connected to Packet Data Network Gateways 48 by corresponding network links 47a, 47b, 47c. The Packet Data Network Gateways 48 are connected to the external networks 50, e.g. by an external bearer. Multiple links 49 to the external networks 50 are available. The external networks 50 are e.g. the Internet, Operator Networks and Private Networks based on IP technology and devices of the external network 50 are e.g. servers and cloud devices. The path on which data packets 30 are sent through the network is defined by the virtual access network identifier (vACC-ID) 32. The virtual access network defined by the virtual access network identifier 32 is to be understood as a network, e.g. a hierarchical network having a tree structure connecting a source and a sink, i.e. a network node which is the destination of a data packet 30 transmitted. In Fig. 4, in the upstream, a source of a data packet 30 is a User Equipment 42 and a sink of the data packet 30 is a Packet Data Network Gateway 48, which provides connection to the external networks 50. In the downstream, a source of a data packet 30 is a Packet Data Network Gateway 48 and a sink of the data packet 30 is a User Equipment 42. The Packet Data Network Gateway 48 identifies by means of the destination address of the IP packet and in general by the traffic flow template (TFT) on which virtual access network a data packet is to be sent and assigns a virtual access network identifier 32. The source is identified in the data packet 30 by an access source address 33. The sink of a data packet 30, i.e. the destination of a data packet 30 is identified by its access destination address 34. The access source address 33 and the access destination address 34 are unique addresses also when exceeding a virtual access network. Thus, the access source address 33 and the access destination address 34 are unique addresses when considering the radio access network, e.g. an LTE or 5G network. The virtual access network contains only networks elements 42, 44, 46, 48 between the source and the destination of a data packet 30 transmitted. No multiple paths are possible from a source to a sink in the virtual access network. The virtual access network is composed of a subset of all network nodes of the network. Fig. 4 depicts three virtual access networks. The first one contains links 43a, 45a, 47a, 49a. The links of the first virtual access network are depicted by solid lines and the tree structure is shown. The second virtual access network contains links 43b, 45b, 47b, 49b. The links of the second virtual access network are depicted by dashed lines and the tree structure is shown. The third virtual access network contains links 43c, 45c, 47c, 49c. The links of the third virtual access network are depicted by crossed lines and the tree structure is shown.

In a network having a tree structure, forwarding data packets in the upstream path from the User Equipment 42 to the network 51 is distinct. At each network node, due to the tree structure, only one data path is available to a network node one level higher in hierarchy. In contrast, in the downstream path from the network 51 to the User Equipment 42, at each network node a decision has to be made on which link the data packet 30 is forwarded in order to provide it to the right receiving User Equipment 42. This decision is made based on a forwarding table, which is generated in the upstream path as described below.

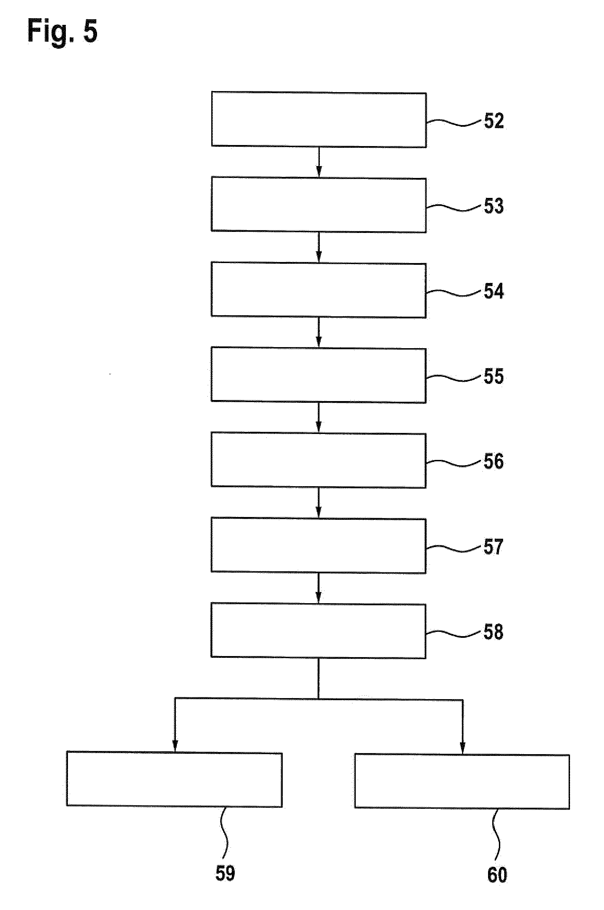

Fig. 5 depicts a method for forwarding data packets in a connectionless bearer service between a User Equipment 42 and a Packet Data Network Gateway 48, which is connected to an external network 50 and for forwarding data packet between the Packet Data Network Gateway 48 and the User Equipment 42. A data packet 30 originating from a User Equipment 42 is received 52 in a network node 44, 46, 48. The data packet 30 comprises a virtual access network identifier 32 describing a virtual access network 43a, 45a, 47a, 49a; 43b, 45b, 47b, 49b; 43c, 45c, 47c, 49c. The data packet further comprises an access source address 33 and an access destination address 34. In step 53, the virtual access network identifier 32, the virtual access source address 33 and the virtual access destination address 34 are extracted from the data packet 30. In step 54, a forwarding table is established in the network node 44, 46, 48 or if the forwarding table already exists in the network node 44, 46, 48, a new data entry is added to the forwarding table. The forwarding table is dedicated to at least one virtual access network which is identified by the virtual access network identifier 32. The forwarding table at least contains information about the source address 33 from which a data packet 30 originates in the upstream, which is the destination address of downstream data packets. Further, the forwarding table at least contains a corresponding logical link (port) on which the data packet 30 has been received, which is the link on which downstream data packets will be sent if they have the corresponding destination address. This information is tied to a virtual access network and hence associated to a corresponding virtual access network identifier 32. In one embodiment, for each virtual access network a forwarding table is established in a network node 44, 46, 48 including the virtual access network identifier 32, the address information and the link information as described above. In one embodiment, only one forwarding table is generated in a network node 44, 46, 48 including the above mentioned information for all virtual access networks which are present in the network node 44, 46, 48. In step 55, a data packet 30 is forwarded upstream to a network node 44, 46, 48 one level higher in hierarchy. In step 56, a data packet 30 is received from a network node 44, 46, 48 one level higher in hierarchy. The access destination address 34 of the data packet 30 is extracted in step 57. In step 58, it is determined if this access destination address 34 is available in a forwarding table of a virtual access network of the network node 44, 46, 48. If the access destination address 34 is available in the forwarding table of the network node 44, 46, 48, the corresponding link is determined and the data packet 30 is forwarded on this link in step 59. If the access destination address 34 is not available, the data packet 30 is broadcast to all links in the direction to network nodes 44, 46, 48 on a lower hierarchy level. This way, it is ensured that the data packet 30 is provided to the right link, even if it is also provided to links which would not be necessary. This enhances data traffic only for the exceptional case, as in most cases the link would be available in the forwarding table of a network node 44, 46, 48 due to previous uplink communication. Each network node 44, 46, 48 between a source and a sink of a virtual access network establishes and manages a forwarding table as described above. As each virtual access network is organized as a tree structure and no loops are present, upstream communication is easily possible within the virtual access network just by forwarding a data packet 30 to the corresponding network node 44, 46, 48 in the same virtual access network one hierarchy higher, and at the same time a forwarding table is generated for downstream forwarding in the virtual access network. According to one embodiment, the forwarding information which was not used for a certain time is deleted from the forwarding table, as it can be assumed that this link is not further used in the next future. The information is again included in the forwarding table, if a further corresponding upstream request is received at the corresponding network node 44, 46, 48.

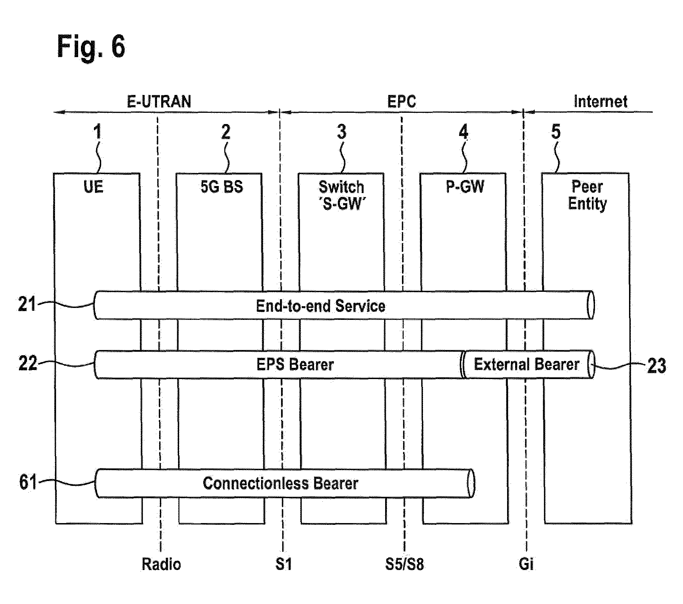

Fig. 6 discloses a schematic view on a connectionless bearer service. An end-to-end connection between a User Equipment 1 and sink in the external network 5 is depicted as end-to-end bearer 21. It is provided by an Evolved Packet switched System bearer (EPS-bearer) 22 and an external bearer 23 providing connection to an external network 5, e.g. the Internet. An EPS-bearer 22 uniquely identifies traffic flows that receive a common Qualtiy of Service (QoS) treatment between a User Equipment 1 and a Packet Data Network Gateway 4. The EPS-Bearer 22 is a virtual connection between the User Equipment 1 and the Packet Date Network Gateway 4, which identifies data sent and received between these two end points with specific QoS attributes, e.g QCI, GBR, Allocation Retention Priorty. This corresponds to the connection oriented bearer service as described with regard to Fig. 2. Further, in Fig. 6 a connectionless bearer 61 is illustrated which is based on a connectionless tunnel protocol. According to the connectionless tunnel protocol, data packets 30 are forwarded from the User Equipment 1 to the Packet Data Network Gateway 4. From there, the data packets 30 are forwarded to the external network, e.g. the Internet.

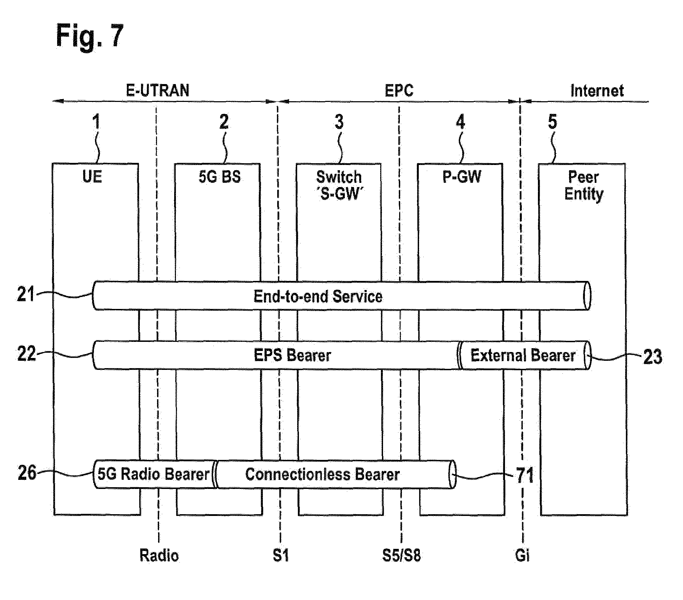

Fig. 7 illustrates a further embodiment of a connectionless bearer service. The radio bearer 26 between User Equipment 1 and the base station 2 is realized as known in the art, i.e. with a 4G or 5G connection oriented radio link. A connectionless tunnel protocol as described above provides a connectionless bearer 71 between the base station 2 and the Packet Data Network Gateway 4.

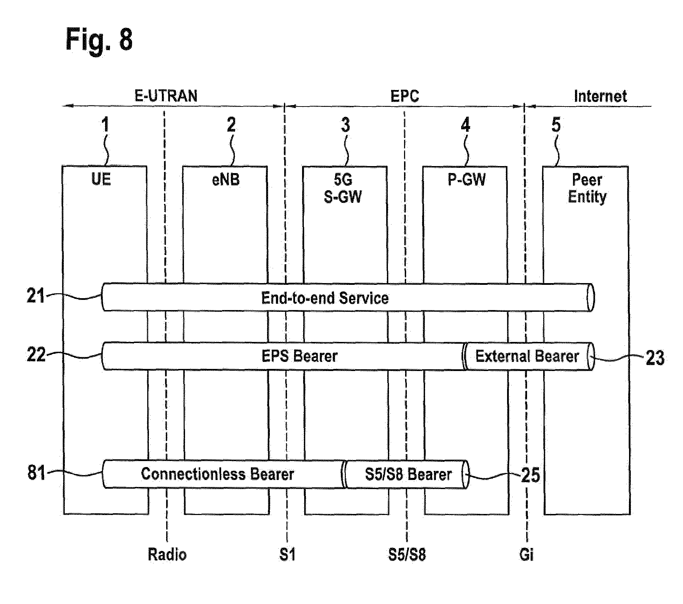

Fig. 8 illustrates a further embodiment of a connectionless bearer service. A connectionless tunnel protocol provides a connectionless bearer 81 between the User Equipment 1 and the Serving Gateway 3. The data packets 30 are then transported by the S5/S8 Bearer 25 of an EPS bearer 22 between the Serving Gateway 3 and the Packet Data Network Gateway 4.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for establishing a connectionless bearer service, comprising the step:
- transmitting a data packet (30) comprising user data (31) and header data, the header data comprising at least a virtual access network identifier (32), wherein the virtual access network identifier (32) is a unique identifier defining a unique virtual access network for the connectionless bearer service.

2. Method for establishing a connectionless bearer service according to claim 1, wherein the virtual access network defined by the virtual access network identifier (32) has a tree topology.

3. Method for establishing a connectionless bearer service according to claim 1 or 2, wherein the virtual access network defined by the virtual access network identifier (32) only contains network elements between the source and the destination of the data packet (30) transmitted.

4. Method for establishing a connectionless bearer service according to one of claims 1 to 3, wherein the header data further comprises an access destination address (34), wherein the access destination address (34) is a unique destination address of the data packet.

5. Method for establishing a connectionless bearer service according to claim 1 or 4, wherein the header data further comprises an access source address (33), wherein the access source address (33) is a unique source address of the data packet.

6. Method for establishing a connectionless bearer service according to one of claims 1 to 5, wherein different virtual access network identifiers (32) are assigned to different services used by the same device.

7. Method for forwarding data packets in a connectionless bearer service, comprising the steps:
- forwarding a data packet (30) comprising user data (31) and header data, the header data comprising at least a virtual access network identifier (32), wherein the virtual access network identifier (32) is a unique identifier extending across virtual networks and defines a unique virtual access network for the connectionless bearer service.

8. Method for forwarding data packets in a connectionless bearer service according to claim 7, wherein the virtual access network defined by the virtual access network identifier (32) has a tree topology and the method further comprises the steps:
- forwarding by a network node a data packet (30) sent by a User Equipment to the virtual access network to the neighbouring network node one level higher in the hierarchy of the virtual access network tree structure, and
- providing by the network node a forwarding table in which the network node one level lower in the hierarchy of the virtual access network from which the data packets (30) was received and a source address (33) of the data packet (30) is stored.

9. Method for forwarding data packets in a connectionless bearer service according to claim 8, further comprising the step:
- forwarding by a network node a data packet (30) to a neighbouring network node one level lower in the hierarchy of the virtual access network according to the forwarding table of the network node.

10. Method for forwarding data packets in a connectionless bearer service according to one of claims 7-9, wherein the header data further comprises an access destination address (34), wherein the access destination address (34) is a unique destination address of the data packet and the header data (30) further comprises an access source address (aSRC), wherein the access source address (33) is a unique source address of the data packet.

11. Method for forwarding data packets in a connectionless bearer service according to one of claims 8-10, wherein the forwarding tables in the network nodes and the virtual access network identifiers (32) define a connectionless tunnel protocol for forwarding data packets (30) from a access source address (33) to a access destination address (34).

12. Network node for forwarding data packets in a connectionless bearer service, wherein the network node performs a method according to one of claims 1-11.

13. Network node for forwarding data packets in a connectionless bearer service, comprising:
- a receiver for receiving a data packet (30) comprising user data (31) and header data, the header data comprising at least a virtual access network identifier (32), wherein the virtual access network identifier (32) is a unique identifier extending across virtual networks and defining a unique virtual access network for the connectionless bearer service,
- a source address analyser for analysing the source of a data packet (30) according to the header data of the data packet (30),
- a forwarding table for storing the network node one level lower in the hierarchy of the virtual access network from which the data packet (30) was received and a source address (33) of the data packet (30), and
- a transmitter for sending a data packet (30) downstream to a network node one level lower in hierarchy of the virtual access network according to the information stored in the forwarding table.

14. User Equipment for establishing a connectionless bearer service, wherein the user equipment performs a method according to one of claims 1-6.

15. Virtual access network comprising:
- at least one source endpoint,
- at least one sink endpoint, and
- at least one network node in the network path between the source endpoint and the sink endpoint, wherein the virtual access network is a network slice of a physical radio access network, and wherein
- the virtual access network has a tree structure, and
- is allocated to a dedicated service, and wherein the at least one network node is a network node according to claim 13.
